# EUROPEAN PATENT APPLICATION

(11) **EP 0 617 494 A1**
(43) Date of publication of application: **28.09.1994**
(21) Application number: 93902253.9
(22) Date of filing: 12.01.1993
(51) Int. Cl.: H02G 3/14

(54) **ELECTRIC DISTRIBUTION BOX FOR MAINS DISTRIBUTION POINT AND INFORMATICS TRANSMISSION**

(30) Priority: 09.10.1992 ES 9202949 U
(71) Applicant: LOPEZ GOMEZ, Pedro, E-28022 Madrid (ES)
(72) Inventor: LOPEZ GOMEZ, Pedro, E-28022 Madrid (ES)
(74) Representative: Molero Moraleda, Felipe
(86) International application number: ES9300002
(87) International publication number: WO9409540

(57) **Abstract**

Electric distribution box for mains distribution point and informatics transmission, having a parallelepipedic shape whose front part is the lid which is secured through conventional bolts and nuts and with the possibility of rotating by means of hinges arranged in one of the side walls. The lid has five windows. Two of them are rectangular, one for positioning the automatic module and the other one slightly larger for installing three cylindrical female tap connectors with ground connection. A small neon pilot situated at one corner of said latter window is used as a system for visualizing the connection of the assembly to the electric mains, through the automatic means. These two disclosed elements, the automatic means and the female mains connectors, are secured together inside the box through conventional bolts and nuts. The other three windows have the same dimensions and are used for the mounting, fixed to the lid, of three informatics transmission connectors.

## Description

The present invention, as indicated in its title, relates to an electric and informatics distribution box, having a rectangular parallelepipedic shape with a lid on the front side thereof fixed with screws and having the possibility of rotating on a larger side wall by means of hinges. The lid has five cavities , such as windows, two of which being elongated rectangulars, the first of them near a smaller side wall which is used for the installation of an automatic module, and the other near a larger side wall where three female tap connectors, being circular and having ground connections, are placed. The other three cavities of the lid are square-shaped, being symmetrically distributed on the remaining larger side wall; there are three standard connectors located inside the box for informatics applications, of distribution and transmission of data, said three connectors being joined and fixed to the lid, and the rest of the connectors are installed fixed on the general body of the distribution box.

As indicated hereinabove, the box has a rectangular parallelepipedic right angle shape, its front side being the lid where the connectors and the automatic means are placed, siad lid being of elongated rectangular shape. The bottom has smaller dimension with respect to the general body of the lid, the latter being fixed by means of various screws distributed symmetrically on the larger side walls. The reception of these screws inside the box is carried out by small tubular cylinders, joined tangentially to the body of the box. There exists the possibility that the a longer side of the lid is joined to the rest of the box by means of hinges situated on the corners of said side, in order to be able to provide the turning of the lid and carry out in such a manner the installation and maintenance operations.

The object of the present invention will be better understood with the aid of the following description carried out on the basis of a practical example of embodiment. Said description is done by the aid of the accompanying drawings in which:

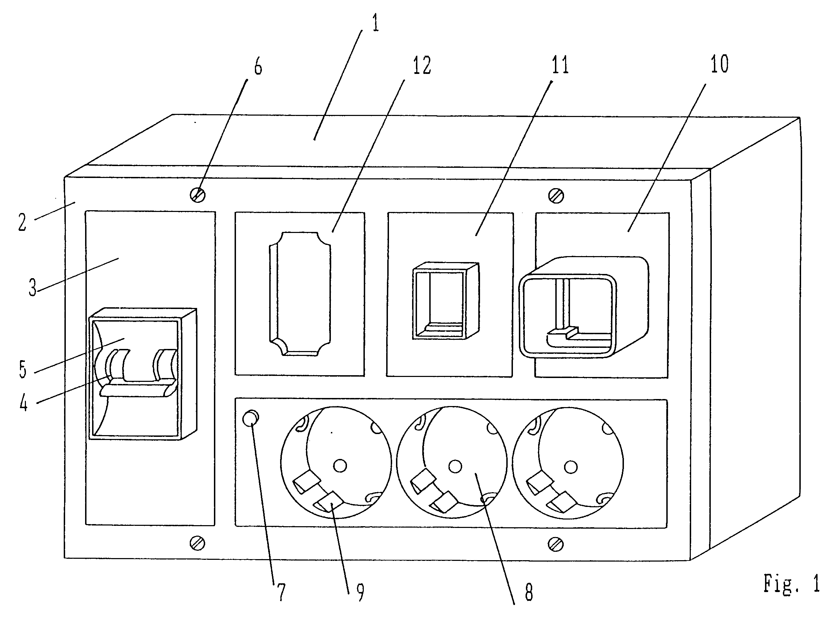

Figure 1 shows a general view in perspective of the electric distribution box.

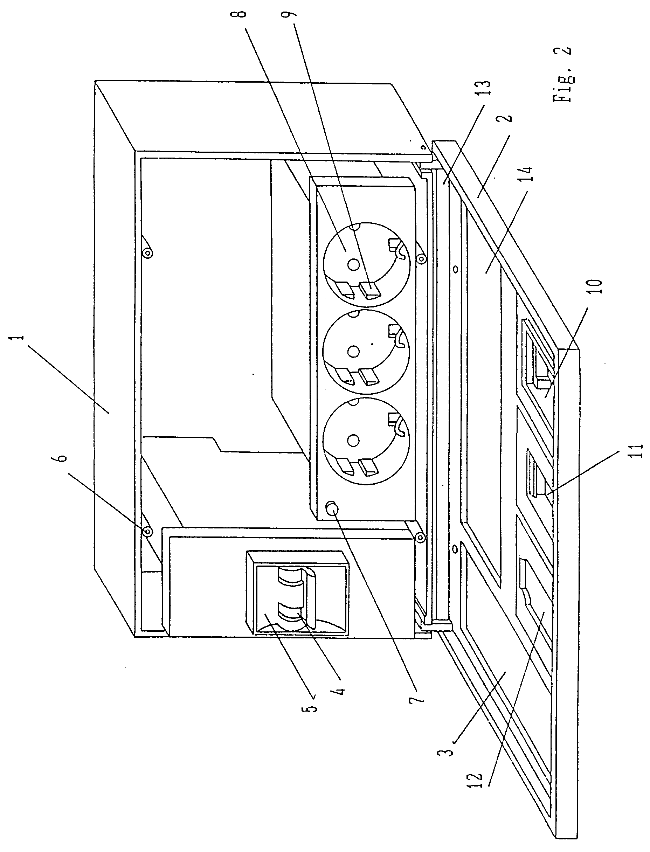

Figure 2 shows a perspective view of the inside of the electric distribution box, with the lid open.

The lid (2) has five windows (3), two of which being rectangular and one near the smaller side where the automatic means (5) is installed, this element being parallelepipedic and rectangular, almost of the same dimensions that the smaller side of the lid, the front part of said automatic means being seen through the window of the lid, in which the activating switch of the automatic means (5) is centered, this being a bar (4), parallel to the smaller side and centered at the middle of the longitude, said bar (4) being situated inside a small square-shaped frame. The activation of the switch is by basculation in order to select the on and off position, the basculation being produced by displacement of two small lumps at right angle, such as ribs, at the ends of the switch bar. This device serves for the protection of the distribution box (1) against over-charges.

Near one of the larger sides of another rectangular window (14), three female tap connectors (8), of the type usually used for electric connections with the mains, are alined, their shape being circular, forming thus cylinders inside the box, at the bottom of which two small cavities serve for receiving the plugs of a male connector to the mains. Small protuberances (9), in prism shape, serve as fixing means as well as connection means to the ground point. In this manner the possibilitiy of drifting from the lines and overloads is minimized. On a corner of this connection plate, the one near the center of the lid, a neon light (7) is situated for visual indication of the connection of the distribution box (1) to the electric mains, through the automatic means (5). The lid (2) is fixed to the box (1) by means of screws (6). The lid (2) pivots around hinges (13).

The above-mentioned two modules are installed in fixed form inside the box, and the other three, described hereinbelow, are fixed to the lid of the box, these three connectors having a square-shaped window, being alined on the lid near the opposite longer side, inside of which three standard type connectors (10), (11) and (12) for informatics transmission are installed; in such a manner the electric signals necessary for the operation of an informatics system are supplied to the same.

Having sufficiently described the nature of the present invention, as well as one way of putting it into practice, it onlyremains to be added that it is possible to introduce changes of form, material and disposition in the invention as a whole or in parts of which it is composed, as long as said alterations do not vary substantially the characteristics of the invention which are claimed as follows.

## Claims

1. Electric distribution box for mains distribution point and informatics transmission, of the type usually used to provide energy supply from the mains and electric information signals, mainly informatics, to electric apparatuses, characterized in having a general shape of right angle parallelepipedic rectangular box, having a lid at the front part, fixed by means of screws, with five windows distributed on the surface thereof, two of which being rectangular, one for the positioning of an automatic means, and another where three cylindrical female tap connectors are placed alined and with ground terminal; a small neon light on a corner of this window serves as display of the connection of the whole assembly to the mains, through the automatic means, siad described elements being fixed inside the box by means of screws. The remaining three windows are square-shaped, having the same dimensions, and serve for the installation of three connectors of informatics transmission fixed to the lid. The lid being fixed to the lid by means of screws, having the possibility that a longer side of the same is joined to the rest of the box by means of hinges, allowing thus its joining and turning in order to carry out the installation and maintenance operations of the whole assembly.

2. Electric distribution box for mains distribution point and informatics transmission, according to the previous claim, characterized in that the switch is a bar parallel to the smaller sides , being basculant and placed inside a small square-shaped frame. The activation of the switch is by means of basculation for which it has two ribs perpendicular to the bar at its ends for the selection of on or off of the distribution box.
